# EUROPÄISCHE PATENTSCHRIFT

(11) **EP 0 850 494 B1**
(45) Veröffentlichungstag und Bekanntmachung des Hinweises auf die Patenterteilung: **24.03.1999**
(21) Anmeldenummer: 96934409.2
(22) Anmeldetag: 03.09.1996
(51) Int. Cl.: H01M 8/04

(54) **VERFAHREN ZUM BETREIBEN EINER BRENNSTOFFZELLENANLAGE UND BRENNSTOFFZELLENANLAGE ZUM DURCHFÜHREN DES VERFAHRENS**
PROCESS FOR OPERATING A FUEL CELL INSTALLATION AND FUEL CELL INSTALLATION FOR IMPLEMENTING IT
PROCEDE D'ACTIONNEMENT D'UN SYSTEME DE PILES A COMBUSTIBLE ET SYSTEME DE PILES A COMBUSTIBLE PERMETTANT DE METTRE LEDIT PROCEDE EN OEUVRE

(30) Priorität: 11.09.1995 DE 19533603
(43) Veröffentlichungstag der Anmeldung: 01.07.1998
(73) Patentinhaber: SIEMENS AKTIENGESELLSCHAFT, 80333 München (DE)
(72) Erfinder: MÜLLER, Reinhard, D-91058 Erlangen (DE); STÜHLER, Walter, D-96114 Hirschaid (DE); NÖLSCHER, Christoph, D-90419 Nürnberg (DE)
(86) Internationale Anmeldenummer: DE9601635
(87) Internationale Veröffentlichungsnummer: WO9710619

(56) Entgegenhaltungen:
- FR-A- 2 040 000
- FR-A- 2 349 221
- US-A- 5 360 679

## Beschreibung

Die Erfindung bezieht sich auf ein Verfahren zum Betreiben einer Brennstoffzellenanlage und auf eine Brennstoffzellenanlage zum Durchführen des Verfahrens.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom mit hohem Wirkungsgrad und - wenn als Prozeßgas reiner Wasserstoff eingesetzt wird - ohne Emission von Schadstoffen und Kohlendioxid. Auch mit technischen Prozeßgasen, beispielsweise Erdgas oder Kohlegas, und mit Luft oder mit mit O₂ angereicherter Luft anstelle von reinem Sauerstoff erzeugt eine Brennstoffzelle deutlich weniger Schadstoffe und weniger CO₂ als andere Energieerzeuger, die mit fossilen Energieträgern arbeiten. Die technische Umsetzung des Prinzips der Brennstoffzelle hat zu sehr unterschiedlichen Lösungen, und zwar mit verschiedenartigen Elektrolyten und mit Betriebstemperaturen zwischen 80°C und 1000°C, geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Ein Brennstoffzellenblock, der in der Fachliteratur auch "Stack" genannt wird, setzt sich in der Regel aus einer Vielzahl aufeinandergestapelter Brennstoffzellen zusammen.

Als problematisch erweist sich dabei die Befeuchtung und Verdichtung der Prozeßgase vor dem Eintritt in den Brennstoffzellenblock, da die Verdampfungsenthalpie für die Befeuchtung bereitgestellt werden muß. Aus der Literatur sind Vorrichtungen mit Membranbefeuchtung oder Wassereinspritzung nach der Verdichtung, beispielsweise aus dem Deutschen Patent 43 18 818, bekannt. Nicht zu vernachlässigen ist außerdem die Baugröße des Membranbefeuchters, die in derselben Größenordnung wie die des Brennstoffzellenblockes ist, wodurch ein zusätzlicher Raumbedarf entsteht. Beide Lösungen erweisen sich als kostenintensiv.

Desweiteren ist aus der Deutschen Offenlegungsschrift 42 01 632 ein Verfahren zum Befeuchten mindestens eines einer sauren oder alkalischen Brennstoffzelle zuströmenden Reaktanten bekannt, wobei dieser von dem aus der Brennstoffzelle abströmenden selben Reaktanten nur durch eine semipermeable Membran getrennt ist.

Außerdem wird in der Französischen Offenlegungsschrift 2 349 221 eine Brennstoffzellenanlage beschrieben, in der zwei Flüssigkeitsringpumpen die Gase in die Brennstoffzellen einspeisen. Die Abgase der Brennstoffzellen werden in einem Kreislauf zurückgeführt und von mitgeführtem Kaliumcarbonatelektrolyten dadurch getrennt, daß dieser in der Flüssigkeitsringpumpe durch die Zentrifugalkraft in den Flüssigkeitsring übergeht.

Der Erfindung liegt nun die Aufgabe zugrunde, ein Verfahren zum Betreiben einer Brennstoffzellenanlage anzugeben, bei dem zum Befeuchten und Verdichten der Prozeßgase ein Druckabfall im Befeuchter vermieden, die Baugröße reduziert wird und zusätzliche Kosten eingespart werden. Außerdem soll eine Brennstoffzellenanlage zum Durchführen des Verfahrens angegeben werden.

Die erstgenannte Aufgabe wird gemäß der Erfindung gelöst durch ein Verfahren zum Betreiben einer Brennstoffzellenanlage, die mindestens einen Brennstoffzellenblock umfaßt, wobei ein Prozeßgas für den Brennstoffzellenblock mit einem Flüssigkeitsringverdichter in den Brennstoffzellenblock eingespeist wird, wobei der Brennstoffzellenblock mit Kühlwasser aus einem Kühlwasserbehälter gekühlt und der Flüssigkeitsringverdichter mit dem Kühlwasser aus dem Brennstoffzellenblock betrieben wird.

Die zweitgenannte Aufgabe wird gemäß der Erfindung gelöst durch eine Brennstoffzellenanlage, die mindestens einen Brennstoffzellenblock und einen Flüssigkeitsringverdichter zum Einspeisen eines Prozeßgases für den Brennstoffzellenblock in den Brennstoffzellenblock umfaßt, wobei zwischen dem Flüssigkeitsringverdichter und dem Brennstoffzellenblock ein Kühlwasserbehälter angeordnet ist, so daß der Brennstoffzellenblock mit Kühlwasser aus dem Kühlwasserbehälter gekühlt und der Flüssigkeitsringverdichter mit dem Kühlwasser aus dem Brennstoffzellenblock betrieben wird.

Durch die Verwendung des Flüssigkeitsringverdichters wird das benötigte Prozeßgas beim Verdichten zugleich befeuchtet. Der Befeuchtungsgrad wird über die Temperatur und dem Durchsatz des dem Flüssigkeitsringverdichters zugeführten Kühlwassers eingestellt. Dieses Verfahren kann für Prozeßgase sowohl auf der Anoden- als auch auf der Kathodenseite angewendet werden. Der aus dem Stand der Technik bekannte Membranbefeuchter kann somit entfallen, womit zugleich auch der Druckabfall im Befeuchter vermieden wird und damit die erforderliche Verdichterleistung für den Betrieb des Brennstoffzellenblocks reduziert wird. Demzufolge wird auch die Baugröße der Brennstoffzellenanlage verkleinert. Es wird somit eine Gerätekomponente eingespart, die dieselbe Größenordnung wie die des Brennstoffzellenblockes hat. Dadurch reduzieren sich auch die Kosten für die gesamte Anlage. Da das Kühlwasser aus dem Brennstoffzellenblock entnommen wird, wird das Prozeßgas vorteilhafterweise mit der Brennstoffzellenblocktemperatur befeuchtet.

Vorzugsweise wird zum Steuern der Durchflußmenge des Prozeßgases durch den Flüssigkeitsringverdichter ein Teil des Prozeßgases in einem Bypass um den Flüssigkeitsringverdichter geführt. Durch diese Bypassteuerung entfällt eine zusätzliche Drehzahlregelung für den Flüssigkeitsringverdichter. Dies hat den Vorteil einer hohen Systemdynamik, da der Motor des Flüssigkeitsringverdichters kontinuierlich läuft, was sich zugleich als eine zusätzliche Kostenersparnis für den Flüssigkeitsringverdichter erweist.

In einer weiteren Ausgestaltung wird das Prozeßgas in einem dem Flüssigkeitsringverdichter vorgeschaltetem Wärmetauscher erwärmt. Erfordert der Betrieb der Brennstoffzellenanlage eine größere Durchflußmenge des Prozeßgases, so reicht das Kühlwasser, das den Flüssigkeitsringverdichter durchströmt, allein für die Erwärmung des Prozeßgases und zum Aufbringen der Verdampfungsenthalpie für die Befeuchtung nicht aus. Es bedarf einer zusätzlichen externen Erwärmung, d.h. einer Erwärmung des Prozeßgases außerhalb des Flüssigkeitsringverdichters. Der Durchsatz an Kühlflüssigkeit durch den Flüssigkeitsringverdichter allein ist in diesem Fall zu gering.

Vorzugsweise wird das Prozeßgas durch das Kühlwasser aus dem Brennstoffzellenblock erwärmt. Dabei wird die Wärme des Kühlwassers in dem Wärmetauscher an das Prozeßgas für den Brennstoffzellenblock übertragen.

Insbesondere wird dem Prozeßgas ein Prozeßabgas aus dem Brennstoffzellenblock zum Befeuchten und Erwärmen zugeführt. Auf diese Weise wird die Menge an benötigtem Prozeßgas verringert.

In einer weiteren Ausgestaltung ist ein Bypass zum Steuern der Durchflußmenge des Prozeßgases durch den Flüssigkeitsringverdichter vorgesehen.

Vorzugsweise ist ein Ventil zum Steuern der Durchflußmenge des Prozeßgases durch den Bypass vorgesehen.

Insbesondere ist ein Wärmetauscher zum Erwärmen des Prozeßgases dem Flüssigkeitsringverdichter vorgeschaltet.

In einer weiteren Ausgestaltung ist eine Prozeßabgasrückführung vorgesehen, die ein Prozeßabgas aus dem Brennstoffzellenblock dem Prozeßgas zuführt.

Zur weiteren Erläuterung der Erfindung wird auf die Ausführungsbeispiele der Zeichnung verwiesen. Es zeigen:

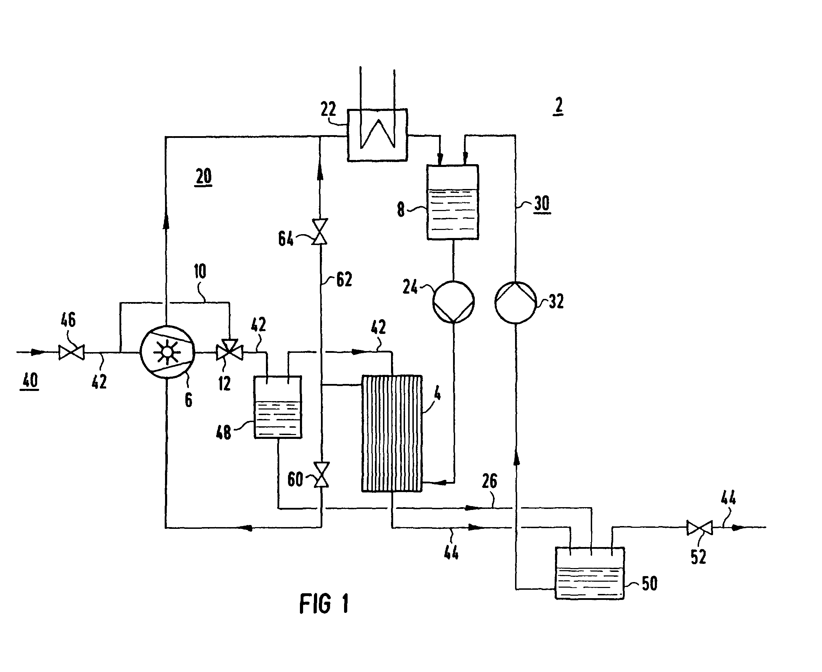

- FIG 1 bis FIG3: Brennstoffzellenanlagen in schematischer Darstellung.

Gemäß Figur 1 umfaßt eine Brennstoffzellenanlage 2 einen Brennstoffzellenblock 4, einen Kühlwasserkreislauf 20, eine Produktwasserrückführung 30 und eine Prozeßgasführung 40.

Die Prozeßgasführung 40 setzt sich aus einem Zuweg 42 für das Prozeßgas für den Brennstoffzellenblock 4 und einem Abweg 44 für das Prozeßabgas aus dem Brennstoffzellenblock 4 zusammen.

In dem Zuweg 42 sind in Strömungsrichtung der Reihenfolge nach ein Ventil 46, ein Flüssigkeitsringverdichter 6, ein Ventil 12 und ein Wasserabscheider 48 angeordnet. Der Flüssigkeitsringverdichter 6 wird vom Kühlwasserkreislauf 20 mit Kühlwasser versorgt. Durch die Verwendung des Flüssigkeitsringverdichters 6 wird das Prozeßgas beim Verdichten zugleich befeuchtet. Der Befeuchtungsgrad wird über die Temperatur des dem Flüssigkeitsringverdichters 6 zugeführten Kühlwassers und dessen Durchsatzes eingestellt. Dieses Verfahren kann für Prozeßgase sowohl auf der Anoden- als auch auf der Kathodenseite des Brennstoffzellenblocks 4 angewendet werden.

Zwischen dem Ventil 46 und dem Flüssigkeitsringverdichter 6 zweigt ein Bypass 10 aus dem Zuweg 42 ab und mündet zwischen dem Flüssigkeitsringverdichter 6 und dem Wasserabscheider 48 in das Ventil 12, welches wiederum im Zuweg 42 angeordnet ist. Durch diese Bypassteuerung kann eine zusätzliche Drehzahlregelung für den Flüssigkeitsringverdichter 6 entfallen. Dies hat den Vorteil einer hohen Systemdynamik, da der Motor des Flüssigkeitsringverdichters 6 kontinuierlich läuft und der Brennstoffzellenblock 4 trotzdem, in Abhängigkeit vom jeweiligen elektrischen Strom, die entsprechende Durchflußmenge des Prozeßgases erhält.

In dem Abweg 44 für das Prozeßabgas aus dem Brennstoffzellenblock 4 sind in Strömungsrichtung der Reihenfolge nach ein Produktwasserbehälter 50, in dem das Produktwasser aus dem Brennstoffzellenblock 4 gesammelt wird, und ein Ventil 52 angeordnet.

In dem Kühlwasserkreislauf 20, der aus dem Brennstoffzellenblock 4 abzweigt und wieder in denselbigen mündet, sind von dem Brennstoffzellenblock 4 ausgehend in Strömungsrichtung der Reihenfolge nach ein Ventil 60, der Flüssigkeitsringverdichter 6, ein Kühler 22, ein Kühlwasserbehälter 8 und eine Kühlwasserpumpe 24 angeordnet. Die Kühlwasserpumpe 24 ist somit das letzte Gerät; bevor sich der Kühlwasserkreislauf 20 schließt und wieder in den Brennstoffzellenblock 4 mündet.

Das aus dem Brennstoffzellenblock 4 abgeführte Kühlwasser erwärmt in dem Flüssigkeitsringverdichter 6 das Prozeßgas für den Brennstoffzellenblock 4 und stellt die zur Befeuchtung des Prozeßgases erforderliche Verdampfungsenthalpie bereit.

Zwischen dem Brennstoffzellenblock 4 und dem Ventil 60 zweigt eine Leitung 62 aus dem Kühlwasserkreislauf 20 ab, um wieder zwischen dem Flüssigkeitsringverdichter 6 und dem Kühler 22 in denselbigen zu münden. In die Leitung 62 ist ein Ventil 64 zum Steuern des Kühlwasseranteils geschaltet, welcher direkt aus dem Brennstoffzellenblock 4 in den Kühler 22 strömt. Über das Ventil 60 wird der Anteil des Kühlwassers für den Flüssigkeitsringverdichter 6 gesteuert.

Die Produktwasserrückführung 30 zweigt aus dem Produktwasserbehälter 50 ab und mündet in den Kühlwasserbehälter 8. In der Produktwasserrückführung 30 ist eine Produktwasserpumpe 32 angeordnet.

Eine Leitung 26 zweigt aus dem Wasserabscheider 48 ab und mündet in den Produktwasserbehälter 50. Überschüssiges Wasser im Wasserabscheider 48 wird somit über die Leitung 26 und die Produktwasserrückführung 30 wieder in den Kühlwasserkreislauf 20 eingespeist.

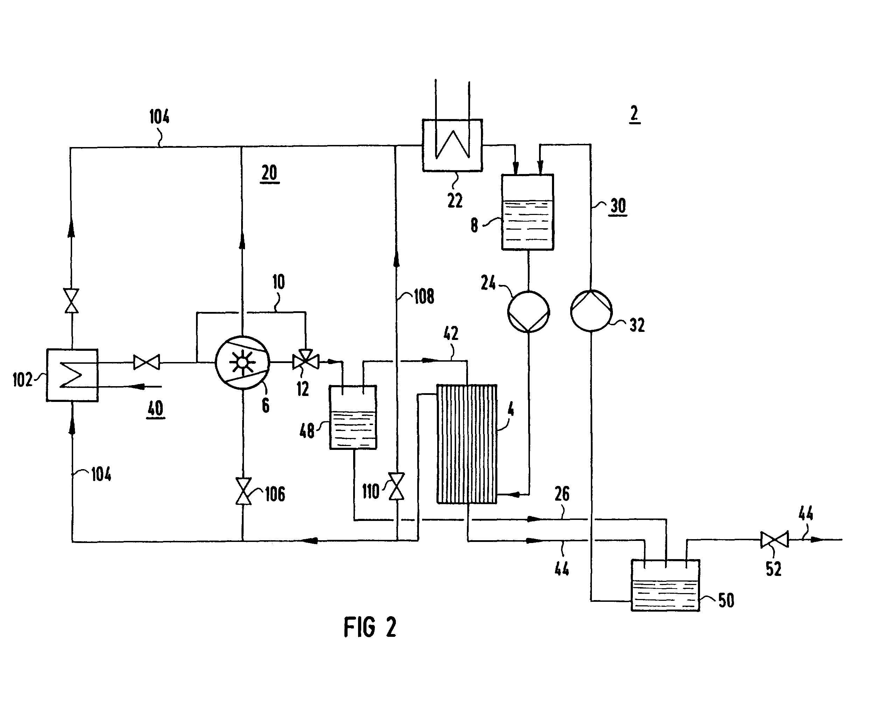

In der Ausgestaltung gemäß Figur 2 ist in dem Zuweg 42 für das Prozeßgas dem Ventil 46 ein Wärmetauscher 102 vorgeschaltet.

Desweiteren zweigt eine Leitung 104 aus dem Kühlwasserkreislauf 20 zwischen dem Brennstoffzellenblock 4 und dem Flüssigkeitsringverdichter 6 ab. In der Leitung 104 strömt das Kühlwasser durch den Wärmetauscher 102 und mündet wieder in den Kühlwasserkreislauf 20 zwischen dem Flüssigkeitsringverdichter 6 und dem Kühler 22. Erfordert der Betrieb der Brennstoffzellenanlage 2 eine größere Durchflußmenge des Prozeßgases für den Brennstoffzellenblock 4, so ist das Kühlwasser für die Erwärmung des Prozeßgases und zum Aufbringen der Verdampfungsenthalpie für die Befeuchtung nicht ausreichend. Es bedarf dann einer zusätzlichen externen Erwärmung, d.h. einer Erwärmung des Prozeßgases außerhalb des Flüssigkeitsringverdichters 6. In diesem Fall wird das Prozeßgas für den Brennstoffzellenblock 4 zusätzlich in dem Wärmetauscher 102 vorgewärmt.

Zum Steuern des Durchsatzes an Kühlwasser durch den Flüssigkeitsringverdichter 6 ist in dem Kühlwasserkreislauf 20 zwischen der Abzweigung der Leitung 104 aus dem Kühlwasserkreislauf 20 und dem Flüssigkeitsringverdichter 6 zusätzlich ein Ventil 106 angeordnet.

Desweiteren zweigt eine Leitung 108 aus dem Kühlwasserkreislauf 20 zwischen dem Brennstoffzellenblock 4 und der Abzweigung der Leitung 104 aus dem Kühlwasserkreislauf 20 ab und mündet zwischen der Einmündung der Leitung 104 in den Kühlwasserkreislauf 20 und dem Kühler 22 wiederum in den Kühlwasserkreislauf 20 ein. In der Leitung 108 ist ein Ventil 110 zum Steuern des Kühlwasseranteils aus dem Brennstoffzellenblock 4, welcher direkt in den Kühler 22 eingespeist wird, angeordnet.

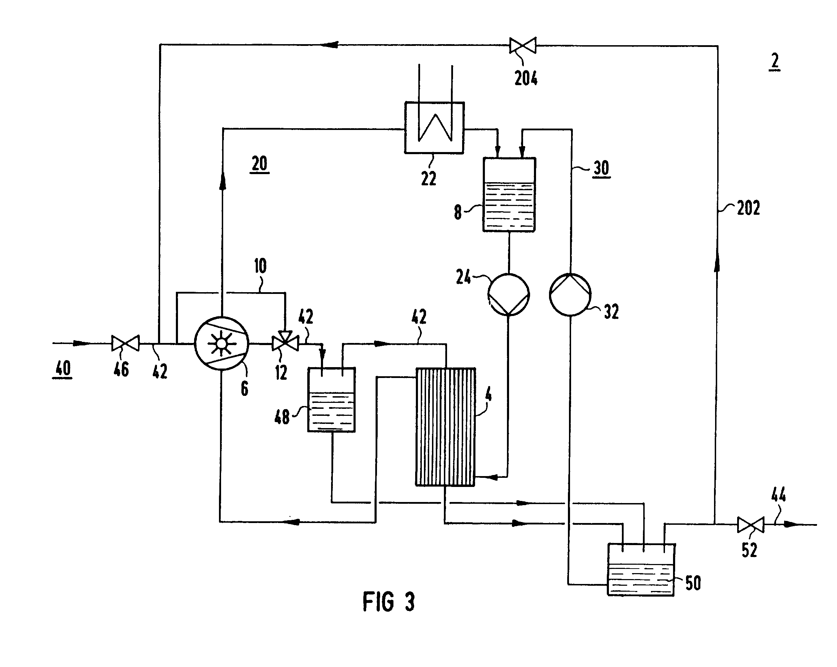

In der dritten Ausgestaltung gemäß Figur 3 wird dem Prozeßgas für den Brennstoffzellenblock 4 ein Prozeßabgas aus dem Brennstoffzellenblock 4 zum Befeuchten und Erwärmen zugeführt. Hierzu zweigt eine Prozeßabgasrückführung 202 aus dem Abweg 44 zwischen dem Produktwasserbehälter 50 und dem Ventil 52 ab, um dann in den Zuweg 42 zwischen dem Ventil 46 und der Abzweigung des Bypasses 10 zu münden.

In der Prozeßabgasrückführung 202 ist ein Ventil 204 zum Steuern der Durchflußmenge des zurückgeführten Prozeßabgases angeordnet.

Das Prozeßabgas aus dem Brennstoffzellenblock 4 gibt seinen Produktwasseranteil an den Produktwasserbehälter 50 ab, bevor es in die Prozeßabgasrückführung 202 gelangt. Demzufolge wird das Prozeßabgas aus dem Brennstoffzellenblock 4 nach dem Durchströmen der Prozeßabgasrückführung 202 wieder als Prozeßgas für den Brennstoffzellenblock 4 verwendet. Auf diese Weise wird das Volumen an benötigtem Prozeßgas verringert und zusätzliche Kosten eingespart.

## Patentansprüche

1. Verfahren zum Betreiben einer Brennstoffzellenanlage (2), die mindestens einen Brennstoffzellenblock (4) umfaßt, wobei ein Prozeßgas für den Brennstoffzellenblock (4) mit einem Flüssigkeitsringverdichter (6) in den Brennstoffzellenblock (4) eingespeist wird, **dadurch gekennzeichnet,** daß der Brennstoffzellenblock (4) mit Kühlwasser aus einem Kühlwasserbehälter (8) gekühlt und der Flüssigkeitsringverdichter (6) mit dem Kühlwasser aus dem Brennstoffzellenblock (4) betrieben wird.

2. Verfahren nach Anspruch 1, bei dem zum Steuern der Durchflußmenge des Prozeßgases durch den Flüssigkeitsringverdichter (6) ein Teil des Prozeßgases in einem Bypass (10) um den Flüssigkeitsringverdichter (6) geführt wird.

3. Verfahren nach Anspruch 1 oder 2, bei dem das Prozeßgas in einem dem Flüssigkeitsringverdichter (6) vorgeschalteten Wärmetauscher (102) erwärmt wird.

4. Verfahren nach einem der vorhergehenden Ansprüche, bei dem das Prozeßgas durch das Kühlwasser aus dem Brennstoffzellenblock (4) erwärmt wird.

5. Verfahren nach einem der vorhergehenden Ansprüche, bei dem dem Prozeßgas ein Prozeßabgas aus dem Brennstoffzellenblock (4) zum Befeuchten und Erwärmen zugeführt wird.

6. Brennstoffzellenanlage (2), die mindestens einen BrennStoffzellenblock (4) und einen Flüssigkeitsringverdichter (6) zum Einspeisen eines Prozeßgases für den Brennstoffzellenblock (4) in den Brennstoffzellenblock (4) umfaßt, wobei zwischen dem Flüssigkeitsringverdichter (6) und dem Brennstoffzellenblock (4) ein Kühlwasserbehälter (8) angeordnet ist, so daß der Brennstoffzellenblock (4) mit Kühlwasser aus dem Kühlwasserbehälter (8) gekühlt und der Flüssigkeitsringverdichter (6) mit dem Kühlwasser aus dem Brennstoffzellenblock (4) betrieben wird.

7. Brennstoffzellenanlage (2) nach Anspruch 6, bei der ein Bypass (10) zum Steuern der Durchflußmenge des Prozeßgases durch den Flüssigkeitsringverdichter (6) vorgesehen ist.

8. Brennstoffzellenanlage (2) nach Anspruch 7, bei der ein Ventil (12) zum Steuern der Durchflußmenge des Prozeßgases durch den Bypass (10) vorgesehen ist.

9. Brennstoffzellenanlage (2) nach einem der Ansprüche 6 bis 8, bei der ein Wärmetauscher (102) zum Erwärmen des Prozeßgases dem Flüssigkeitsringverdichter (6) vorgeschaltetet ist.

10. Brennstoffzellenanlage (2) nach einem der Ansprüche 6 bis 9, bei der eine Prozeßabgasrückführung (202) vorgesehen ist, mit der ein Prozeßabgas aus dem Brennstoffzellenblock (4) dem Prozeßgas zugeführt wird.

## Claims

1. Method for operating a fuel cell installation (2) which comprises at least one fuel cell block (4), wherein a process gas for the fuel cell block (4) is fed into the fuel cell block (4) by means of a liquid ring compressor (6), characterised in that the fuel cell block (4) is cooled with cooling water from a cooling water container (8), and the liquid ring compressor (6) is operated with the cooling water from the fuel cell block (4).

2. Method according to claim 1, wherein a portion of the process gas is directed in a by-pass (10) around the liquid ring compressor (6) for the purpose of controlling the flow of the process gas through the liquid ring compressor (6).

3. Method according to claim 1 or 2, wherein the process gas is heated in a heat exchanger (102) connected upstream of the liquid ring compressor (6).

4. Method according to one of the preceding claims, wherein the process gas is heated by the cooling water from the fuel cell block (4).

5. Method according to one of the preceding claims, wherein a waste process gas from the fuel cell block (4) is fed to the process gas for wetting and heating purposes.

6. Fuel cell installation (2), which comprises at least one fuel cell block (4) and a liquid ring compressor (6) for feeding a process gas for the fuel cell block (4) into the fuel cell block (4), wherein a cooling water container (8) is arranged between the liquid ring compressor (6) and the fuel cell block (4) so that the fuel cell block (4) is cooled with cooling water from the cooling water container (8), and the liquid ring compressor (6) is operated with the cooling water from the fuel cell block (4).

7. Fuel cell installation (2) according to claim 6, wherein a by-pass (10) is provided for controlling the flow of the process gas through the liquid ring compressor (6).

8. Fuel cell installation (2) according to claim 7, wherein a valve (12) is provided for controlling the flow of the process gas through the by-pass (10).

9. Fuel cell installation (2) according to one of claims 6 to 8, wherein a heat exchanger (102) is connected upstream of the liquid ring compressor (6) for the purpose of heating the process gas.

10. Fuel cell installation (2) according to one of claims 6 to 9, wherein a waste process gas return line (202) is provided, with which line a waste process gas from the fuel cell block (4) is fed to the process gas.

## Revendications

1. Procédé pour faire fonctionner une installation (2) de piles à combustible, qui comporte au moins un bloc (4) de piles à combustible, un gaz de processus pour le bloc (4) de piles à combustible étant envoyé dans le bloc (4) de piles à combustible par un compresseur (6) à anneau liquide, caractérisé en ce qu'il consiste à refroidir le bloc (4) de piles à combustible par de l'eau de refroidissement provenant d'une cuve (8) d'eau de refroidissement et à faire fonctionner le compresseur (6) à anneau liquide avec l'eau de refroidissement provenant du bloc (4) de piles à combustible.

2. Procédé suivant la revendication 1, qui consiste, pour commander le débit du gaz de processus dans le compresseur (6) à anneau liquide, à faire passer une partie du gaz de processus dans une dérivation (10) contournant le compresseur (6) à anneau liquide.

3. Procédé suivant la revendication 1 ou 2, qui consiste à chauffer le gaz de processus dans un échangeur de chaleur (102) monté en amont du compresseur (6) à anneau liquide.

4. Procédé suivant l'une des revendications précédentes, qui consiste à chauffer le gaz de processus par l'eau de refroidissement sortant du bloc (4) de piles à combustible.

5. Procédé suivant l'une des revendications précédentes, qui consiste à ajouter au gaz de processus un gaz effluent de processus provenant du bloc (4) de piles à combustible pour l'humidifier et le réchauffer.

6. Installation (2) de piles à combustible, qui comporte au moins un bloc (4) de piles à combustible et un compresseur (6) à anneau liquide pour envoyer dans le bloc (4) de piles à combustible un gaz de processus pour le bloc (4) de piles à combustible, une cuve (8) d'eau de refroidissement étant interposée entre le compresseur (6) à anneau liquide et le bloc (4) de piles à combustible, de manière que le bloc (4) de piles à combustible soit refroidi par de l'eau de refroidissement provenant de la cuve (8) d'eau de refroidissement et que le compresseur (6) à anneau liquide fonctionne avec l'eau de refroidissement provenant du bloc (4) de piles à combustible

7. Installation (2) de piles à combustible suivant la revendication 6 dans laquelle il est prévu une dérivation (10) pour commander le débit du gaz de processus dans le compresseur (6) à anneau liquide.

8. Installation (2) de piles à combustible suivant la revendication 7 dans laquelle il est prévu une vanne (12) pour commander le débit du gaz de processus dans la dérivation (10).

9. Installation (2) de piles à combustible suivant l'une des revendications 6 à 8, dans laquelle il est monté en amont du compresseur (6) à anneau liquide un échangeur de chaleur (102) pour réchauffer le gaz de processus.

10. Installation (2) de piles à combustible suivant l'une des revendications 6 à 9, dans laquelle il est prévu un conduit (202) de retour du gaz effluent de processus, par lequel il peut être ajouté au gaz de processus un effluent de gaz de processus provenant du bloc (4) de piles à combustible.
